Europäisches Patentamt

European Patent Office

Office européen des brevets

(19)

(11) **EP 0 706 063 B1**

(12) **FASCICULE DE BREVET EUROPEEN**

(45) Date de publication et mention
de la délivrance du brevet:
**12.01.2000 Bulletin 2000/02**

(51) Int Cl.⁷: **G01S 17/08**

(21) Numéro de dépôt: **95402201.8**

(22) Date de dépôt: **02.10.1995**

(54) **Dispositif de télémétrie comportant un microlaser**

Telemetrievorrichtung mit Mikrolaser

Telemetric device having a microlaser

(84) Etats contractants désignés:
**BE DE GB IT LU**

(30) Priorité: **04.10.1994 FR 9411847**

(43) Date de publication de la demande:
**10.04.1996 Bulletin 1996/15**

(73) Titulaire: **COMMISSARIAT A L'ENERGIE
ATOMIQUE
75015 Paris Cédex 15 (FR)**

(72) Inventeurs:
• **Besesty, Pascal
F-38410 Vaulnaveys Le Haut (FR)**

• **Molva, Engin
F-38000 Grenoble (FR)**

(74) Mandataire: **Dubois-Chabert, Guy et al
BREVATOME
3, rue du Docteur Lanceraux
75008 Paris (FR)**

(56) Documents cités:
**EP-A- 0 348 898          EP-A- 0 448 182
EP-A- 0 578 150          DE-A- 2 502 662
GB-A- 1 566 716          GB-A- 2 266 988
US-A- 4 191 931          US-A- 4 199 226
US-A- 4 782 491          US-A- 5 119 382**

EP 0 706 063 B1

**Description**

Domaine technique

L'invention concerne un dispositif qui permet de déterminer une distance à l'aide de la mesure du temps d'aller et retour d'une impulsion lumineuse entre un télémètre et une cible. L'impulsion lumineuse est émise par un laser : l'invention relève donc du domaine de la télémétrie laser ou du LIDAR.

Elle trouve application dans la mesure de courte et moyenne distance, dans le domaine de l'automobile (pour la mise au point de systèmes anti-collision), dans le domaine de la dimensiométrie, dans celui de la perception de l'environnement pour la robotique.

Etat de la technique antérieure

Dans le domaine de la télémétrie laser, on fait appel à des sources lumineuses comme des diodes laser ou des lasers.

Actuellement, pour le domaine d'application moyenne et courte distance, deux sortes de sources laser sont employées.

Tout d'abord, les diodes laser sont employées pour des mesures à courte distance, c'est-à-dire de portée inférieure à 100 m. Ces diodes sont limitées par leur puissance crête (environ 30 watts) ainsi que par les normes de sécurité oculaire du fait des durées d'impulsion importantes (de 7 à 10 nanosecondes). Un dispositif incorporant une diode laser est décrit dans le brevet français FR-B-2 666 153.

Ce type de dispositif nécessite l'emploi d'optique de mise en forme du faisceau émis par la source lumineuse, d'un dispositif de protection contre le "Feedback" et d'une électronique de déclenchement pour moduler le faisceau laser.

Les normes de travail relatives au problème de sécurité oculaire (par exemple la norme NFC 43-801 en France) donne la puissance maximale pouvant être utilisée en fonction d'une durée d'impulsion et de la longueur d'onde de la source lumineuse. Ainsi, pour une longueur d'onde de 1,064 µm, avec une impulsion de 8 nanosecondes, la puissance maximale est de 250 watts, et pour une durée de l'impulsion de moins de 1 nanoseconde, elle est de 2000 watts. Avec les diodes laser, on est donc loin de ces limites. En ce qui concerne les sources laser à semi-conducteur, il est impossible d'obtenir des puissances crêtes importantes avec une durée d'impulsion brève car le courant d'injection qui doit être fourni à la jonction sera limité par les selfs et les capacités. Un tel art antérieur est décrit par exemple dans les documents de brevet DE-A-25 02 662, EP-A-578 150, ou EP-A-348 898.

Les lasers solides classiques sont employés pour des mesures à moyenne et grande distances, mais ils sont très encombrants, peu robustes et ne peuvent pas être intégrés dans des systèmes miniaturisés, à faible coût.

En outre, le dispositif décrit dans le brevet FR-B-2 666 153 ne permet pas de répondre à des applications moyenne distance à sécurité oculaire avec un encombrement limité.

On ne connaît donc pas, à l'heure actuelle, de dispositif de télémétrie laser, à fonctionnement impulsionnel, mettant en jeu le temps de vol de l'impulsion lumineuse, qui puisse fonctionner en respectant simultanément les contraintes suivantes :

- possibilité de mesure de courte et moyenne distances (de 100 à 2000 m),
- dispositif compact avec intégration possible,
- dispositif simplifié en électronique, ne nécessitant pas de commande de déclenchement,
- dispositif satisfaisant aux normes de sécurité oculaire,
- dispositif pouvant être fabriqué à bas coût, grâce à une fabrication collective.

Exposé de l'invention

La présente invention a pour objet de proposer un dispositif de télémétrie laser, fonctionnant sur le principe de la mesure du temps de vol de l'impulsion lumineuse, et permettant d'atteindre tous les objectifs mentionnés ci-dessus.

De façon plus précise, l'invention a pour objet un dispositif de télémétrie laser selon la revendication 1, fonctionnant sur le principe de la mesure du temps de vol d'une impulsion lumineuse, et qui comprend :

- un microlaser à déclenchement passif,
- des moyens de réception d'une impulsion lumineuse réfléchie par un objet et de détection de l'instant de réception de cette impulsion,
- des moyens de détection de l'instant d'émission d'une impulsion du microlaser,
- des moyens de mesure de l'intervalle de temps séparant l'instant d'émission de l'impulsion microlaser de l'instant de réception du faisceau réfléchi.

Grâce à l'utilisation d'un microlaser fonctionnant en déclenchement passif, le dispositif de télémétrie présente les qualités suivantes :

- il est plus simple que les dispositifs télémétrie selon l'art antérieur, puisqu'il ne nécessite pas l'utilisation d'une électronique de commande impulsionnelle de la source laser (ceci a en outre l'avantage de permettre un gain en consommation énergétique) et qu'il ne nécessite pas d'optique de mise en forme du faisceau de sortie, et donc pas de réglages optiques,
- il permet une grande étendue de mesure, tout en respectant les normes de sécurité oculaire. En effet, les impulsions produites par le microlaser sont très étroites et pour une puissance moyenne donnée qui respecte les normes de sécurité oculaire, il est possible d'augmenter la portée du télémètre.

- il est plus robuste, puisqu'il ne nécessite pas d'alignement optique pour réaliser la source laser.
- il bénéficie des caractéristiques temporelles intéressantes du microlaser, ce qui permet d'atteindre une précision améliorée.
- il est beaucoup moins encombrant, puisque le microlaser est de taille très petite et qu'il est associé à une électronique intégrée ; on obtient donc un dispositif miniature.
- il gagne en fiabilité et en reproductibilité, puisque le microlaser est fabriqué par des méthodes de microélectroniques qui sont très reproductibles et qui se prêtent à la production de série. Ceci permet également de diminuer le coût de production.

Selon un mode particulier de réalisation de l'invention, la cavité du microlaser comporte un milieu actif solide, un miroir d'entrée et un miroir de sortie, et un absorbant saturable sous la forme d'une couche mince de matériau absorbant saturable directement déposé sur le milieu actif solide.

Selon ce mode de réalisation, la structure du microlaser consiste en un empilement de couches, ce qui permet de garder la possibilité d'une fabrication collective à bas coût. Cette structure multicouche ne remet pas en cause la simplicité et les procédés de fabrication collective des microlasers. Elle permet de réaliser des microlasers déclenchés passivement, monolithiques, alignés (c'est-à-dire sans aucun réglage optique) et indéréglables. Cette structure ne nécessite aucune opération de collage d'un composant de la cavité sur un autre composant de la même cavité, ni aucune opération d'alignement. En outre, par rapport aux lasers "codopés", c'est-à-dire dans lequel le même milieu sert à la fois de milieu actif et de milieu absorbant saturable, il est possible de régler indépendamment les épaisseurs (pendant le dépôt des couches ou par amincissement mécanique après dépôt des couches) et les concentrations des ions actifs dans les deux milieux.

Selon un autre aspect de l'invention, les moyens de mesure de l'intervalle de temps comportent :

- une première horloge qui délivre des impulsions avec une période T,
- un circuit numérique pour compter le nombre d'impulsions de la première horloge qui sont suivies par une période entière T et qui sont comprises entre le signal de début (D) et le signal de fin (F),
- un circuit analogique pour déterminer d'une part le temps $t_1$ séparant le signal (D) et le début de la première impulsion de la première horloge qui commence après (D) et d'autre part le temps $t_2$ séparant le signal de fin (F) de la fin de la dernière période de la première horloge qui s'achève avant (F), et apte à convertir les données analogiques obtenues en données numériques,

- un circuit de traitement, pour déterminer la durée de l'intervalle de temps à partir des données fournies par le circuit numérique et celles fournies par le circuit analogique préalablement converties en données numériques.

Ce dispositif permet de mesurer des intervalles de temps très longs avec une très grande précision. En outre, les signaux de départ (D) et de fin (F) peuvent être complètement asynchrones de l'horloge.

Selon un autre mode particulier de réalisation de l'invention, le circuit numérique est muni d'une seconde horloge, dont les impulsions sont décalées par rapport à celles de la première horloge, le circuit numérique compte également le nombre d'impulsions de la seconde horloge qui sont suivies par une période entière et qui sont comprises entre le signal de début (D) et de fin (F), le circuit analogique détermine d'une part le temps séparant le signal (D) et le début de la première impulsion de la deuxième horloge qui commence après (D) et, d'autre part, le temps séparant le signal de fin (F) de la fin de la dernière période de la deuxième horloge qui s'achève avant (F), et ce circuit analogique est apte à convertir les données analogiques obtenues en données numériques et le dispositif comporte en outre des moyens aptes à déterminer lequel des comptages réalisés sur l'une des deux horloges ($H_1$, $H_2$) est à prendre en compte, de manière à résoudre toute situation d'ambiguïté qui pourrait conduire à une erreur de comptage d'une période d'horloge.

Ainsi, il est possible de lever toute situation d'ambiguïté dans le cas où l'un au moins des signaux (D) et (F) est confondu avec une impulsion d'horloge.

D'autres aspects et modes particuliers de réalisation apparaissent dans les revendications dépendantes

<u>Brève description des figures</u>

La présente invention sera mieux comprise à la lumière de la description qui va suivre. Cette description porte sur les exemples de réalisation, donnés à titre explicatif et non limitatif, en se référant à des dessins annexés sur lesquels :

- la figure 1 est un schéma illustrant les composants essentiels d'un dispositif de télémétrie selon l'invention,
- la figure 2 est un exemple d'un dispositif pour la séparation d'un faisceau lumineux issu du microlaser en un faisceau principal et un faisceau secondaire,
- les figures 3a à 4b illustrent des modes de réalisation particulier de la cavité laser d'un dispositif de télémétrie selon la présente invention,
- la figure 5 est un chronogramme illustrant le principe de la mesure du temps de vol mis en oeuvre dans un dispositif selon la présente invention,

- la figure 6 est un dispositif de mise en oeuvre du principe illustré sur la figure 5,
- la figure 7 est un chronogramme illustrant une autre méthode de mesure du temps de vol dans un dispositif selon la présente invention,
- la figure 8 est un dispositif de mise en oeuvre du principe illustré sur la figure 7,
- les figures 9a et 9b représentent l'évolution temporelle respective d'une impulsion lumineuse émise par le microlaser et d'une impulsion lumineuse reçue par le dispositif, après réflexion sur un objet.

Description détaillée de modes de réalisation de l'invention

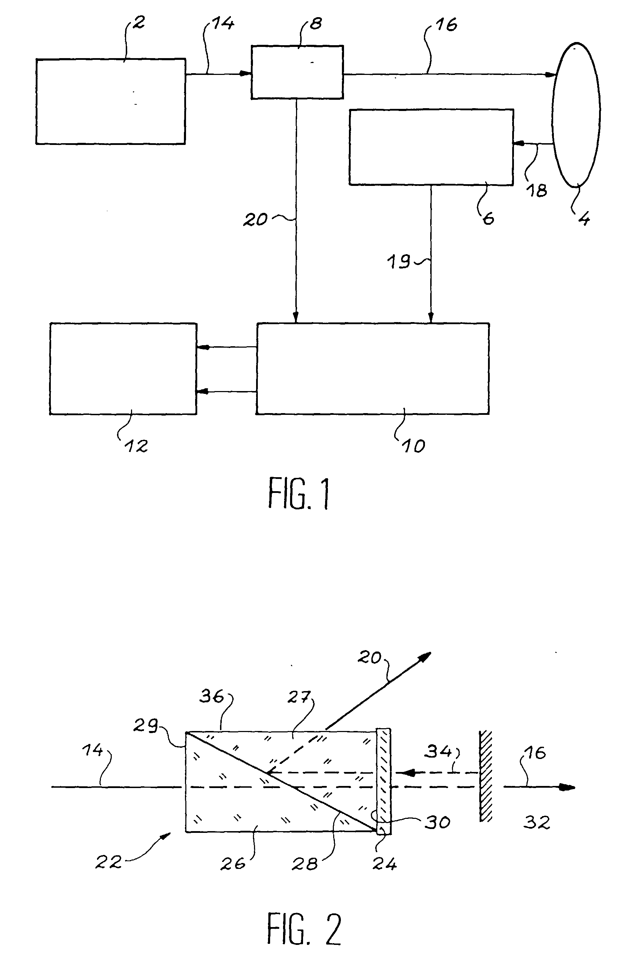

Un dispositif selon l'invention comporte essentiellement, conformément à la figure 1, un microlaser à déclenchement passif 2, qui envoie un faisceau lumineux 14 en direction d'un objet 4 dont on veut déterminer la position. Un faisceau 18 réfléchi par cet objet 4 est dirigé vers des moyens optiques 6 de réception d'un faisceau lumineux, comme par exemple un séparateur de faisceau combiné à une lentille de réception. Le faisceau 19 obtenu en sortie des moyens 6 de réception du faisceau réfléchi 18 est dirigé vers un circuit de détection 10 comportant par exemple un composant photodétecteur qui va fournir une impulsion électrique marquant la fin de l'intervalle que l'on doit mesurer pour déterminer le temps de vol du faisceau. Ce circuit comprend en outre une chaîne amplificatrice (composée d'amplificateurs), qui fournit à un étage comparateur un signal de fin de l'intervalle à mesurer. Ce signal est transmis au dispositif 12 de mesure de temps.

Par ailleurs, le dispositif comporte également des moyens de détection de l'instant d'émission d'une impulsion du microlaser. Ces moyens peuvent comporter par exemple un dispositif 8 de prélèvement d'une partie 20 du flux lumineux du faisceau 14 émis par le microlaser 2, par exemple une lame séparatrice.

Un autre mode de réalisation de ce dispositif 8 est illustré sur la figure 2. Il permet la séparation d'un faisceau lumineux 14 en deux faisceaux, principal 16 et secondaire 20, avec un rapport d'énergie entre la voie principale 16 et la voie secondaire 20 qui peut être très important, par exemple supérieur à 1000. Dans ce mode de réalisation, il comprend un polariseur linéaire 22 (par exemple du type Glan-Thompson) et une lame quart d'onde 24 qui sont placés sur le trajet du faisceau lumineux 14. Le polariseur est constitué de deux prismes 26 et 27 en matériau biréfringent assemblés selon la face de jonction 28, l'ensemble formant un parallélépipède rectangle. Le polariseur 22 présente au faisceau lumineux 14 incident une face d'entrée 29 polie appartenant au prisme 26. Le faisceau lumineux sort du polariseur par la face de sortie 30 également polie et appartenant au prisme 27. Les faces d'entrée 29 et de sortie 30 sont perpendiculaires au trajet du faisceau lumineux 14.

Une lame quart d'onde 24, par exemple en calcite, est collée sur la face de sortie 30 du polariseur linéaire.

La référence 32 désigne un dioptre de sortie pour le faisceau lumineux. Ce peut être la face d'entrée d'une fibre optique, une lentille ou une plaque de verre.

Le faisceau lumineux 14 provenant du microlaser est d'abord polarisé linéairement par le polariseur 22. La lame quart d'onde 24, positionnée à 45° en rotation par rapport à l'axe de propagation du faisceau lumineux 14, transforme la polarisation linéaire en une polarisation circulaire (déphasage de 45°). Lorsque le faisceau lumineux rencontre le dioptre 32, la plus grande partie est transmise par le dioptre pour constituer le faisceau principal 16 et la partie la plus petite 34 est réfléchie vers la lame quart d'onde 24. Cette partie 34 est constituée par les pertes optiques du faisceau lumineux arrivant sur le dioptre 32 et peut donc être une onde de très faible énergie par rapport à l'énergie du faisceau lumineux 14.

Le faisceau réfléchi 34, qui a subi un déphasage de 180° lors de la réflexion sur le dioptre 32, traverse la lame quart d'onde 24 en direction du microlaser 2. Ce faisceau 34 subit un nouveau déphasage de 45°, soit au total 180°+90°, et pénètre dans le polariseur 22.

Le polariseur 22 n'est pas passant pour une onde décalée de 90° et le faisceau 34 est éjecté vers la face 36 du prisme 27. La face 36 ayant été polie, on recueille un faisceau 20 en sortie du polariseur 22.

Le faisceau 20 constitue le faisceau secondaire. Son énergie est proportionnelle au coefficient de réflexion de la face d'entrée du dioptre 32. Ce faisceau 20 est détecté dans le circuit 10 de la figure 1, par exemple par le même composant photodétecteur que celui qui détecte le faisceau 19, la même chaîne amplificatrice fournissant à l'étage comparateur un signal de début de l'intervalle à mesurer, qui est transmis au dispositif 12 de mesure de temps.

Le faisceau principal 16 et le faisceau secondaire 20 sont en phase et de même forme. Seules leurs amplitudes sont différentes.

L'assemblage associant un polariseur linéaire et une lame quart d'onde permet de s'affranchir des perturbations que causeraient le retour d'énergie sur le microlaser, dû à la face d'entrée 29 positionnée à incidence normale sur le trajet du faisceau laser 14. Il suffit donc, pour faire un prélèvement d'énergie, de doter le polariseur d'une face polie supplémentaire 29 et de récupérer de ce fait l'énergie qui était auparavant perdue.

Ce dispositif permet donc de remplir deux fonctions : la fonction de polarisation du faisceau optique et la fonction de prélèvement de signal.

La structure d'un microlaser est décrite par exemple dans l'article de N. Mermilliod et al., Applied Physics Letters, vol. 59, n°27, p. 3519, 1991. Elle consiste en un empilement de multicouches. Le milieu actif laser est constitué par un matériau de faible épaisseur, entre 150 et 1000 µm et de petite dimension (quelques

mm$^2$), sur lequel des miroirs diélectriques de cavité sont directement déposés. Ce milieu actif peut être pompé par une diode laser III-V qui est soit directement hybridée sur le microlaser, soit couplée à ce dernier par une fibre optique.

De façon classique, le matériau constitutif du milieu actif sera dopé au néodyme (Nd) pour une émission laser autour de 1,06 µm. Ce matériau pourra être choisi, par exemple, parmi l'un des matériaux suivants : YAG ($Y_3Al_5O_{12}$), LMA ($LaMgAl_{11}O_{19}$), YVO$_4$, YSO ($Y_2SiO_5$), YLF ($YLiF_4$) ou GdVO$_4$, etc. Ce choix sera conditionné par les critères suivants :

- un fort coefficient d'absorption à la longueur d'onde de la pompe (par exemple, autour de 800 nm pour une diode laser III-V) pour augmenter l'efficacité de pompage, tout en gardant une épaisseur de matériau faible (<1mm).
- une large bande d'absorption à la longueur d'onde de la pompe vers 800 nm pour répondre au problème de la stabilisation en longueur d'onde de la diode laser, et simplifier ainsi le choix et la commande électrique de la diode laser de pompe,
- une forte section efficace d'émission stimulée, pour obtenir des puissances de sortie élevées et de forts rendements,
- une faible largeur de la bande d'émission pour obtenir aisément un laser monofréquence. Ou bien au contraire, une large bande d'émission, pour réaliser une émission laser accordable en fréquence,
- de bonnes propriétés thermomécaniques, pour simplifier l'usinage du matériau et pour limiter les effets thermiques néfastes par une bonne évacuation de la chaleur produite par l'absorption de la pompe (cette chaleur en excès dépendra du rendement énergétique du laser),
- une durée de vie longue dans l'état excité pour un stockage d'énergie important. Ou bien durée de vie courte pour une cadence de déclenchement rapide,
- de grandes dimensions pour pouvoir fabriquer simultanément en fabrication collective, le plus grand nombre de microlasers avec un cristal laser.

En général, aucun des matériaux connus ne répond en même temps à tous ces critères. Cependant, parmi les matériaux connus, ceux qui sont les plus adaptés au fonctionnement du microlaser sont :

- YVO$_4$, qui présente un bon coefficient et une large bande d'absorption ainsi qu'une bonne section efficace. Mais il possède une mauvaise conductivité thermique, on ne l'obtient que sous de faibles dimensions et il est fragile,
- YAG, dont le coefficient d'absorption et la section efficace d'émission stimulée sont moyens et dont les largeurs de bandes d'absorption et d'émission sont faibles. Il se présente sous de grandes dimensions et a une bonne conductivité thermique. Dopé au néodyme (Nd), c'est le matériau laser solide le plus connu et le plus utilisé actuellement,
- LMA : ce matériau offre un coefficient d'absorption et une section efficace faibles. Les bandes d'absorption et d'émission sont larges. Il est de grande dimension mais sa conductivité thermique est mauvaise.

Pour des émissions à d'autres longueurs d'ondes on choisira des matériaux et des dopants différents. En général, les ions actifs sont choisis parmi :

- Nd pour une émission autour de 1,06 µm,
- Er ou un codopage erbium-ytterbium Er+Yb pour une émission autour de 1,5 µm,
- Tm ou Ho ou un codopage de thulium et d'holmium pour une émission autour de 2 µm.

Un autre paramètre décisif est l'épaisseur $\underline{e}$ du milieu actif. Cette épaisseur $\underline{e}$ conditionne les caractéristiques du microlaser :

- d'une part, l'absorption du faisceau pompe sera d'autant plus forte que l'épaisseur e sera grande ;
- d'autre part, le nombre de modes longitudinaux d'une cavité Fabry-Pérot augmente proportionnellement avec l'épaisseur et, si on veut réaliser un laser monomode longitudinal, cette épaisseur doit être faible. Pour un laser mono fréquence, on choisit en général l'épaisseur minimum pour N=1, à condition que cette épaisseur soit >100 µm. Les épaisseurs typiques pour obtenir un seul mode sont :

- YAG          L = 750 µm,
- YVO$_4$           L = 500 µm,
- LMA          L = 150 µm.

En pratique l'épaisseur $\underline{e}$ variera donc entre 100 µm et 5 mm.

Pour déclencher la cavité du microlaser, on rajoute dans celle-ci des pertes variables dans le temps qui vont empêcher l'effet laser pendant un certain temps, durant lequel l'énergie de pompage est stockée dans le niveau excité du matériau à gain. Ces pertes sont brusquement diminuées, à des moments précis, libérant ainsi l'énergie emmagasinée en un temps très court (pulse géant).

Dans le cas d'un déclenchement dit passif, les pertes variables sont introduites dans la cavité sous forme d'un matériau (appelé Absorbant Saturable - A.S. -) qui est fortement absorbant à la longueur d'onde laser et à faible densité de puissance, et qui devient pratiquement transparent lorsque cette densité dépasse un certain seuil qu'on appelle intensité de saturation de l'A.S.

Selon un mode particulier de réalisation de l'invention, l'absorbant saturable se présente sous la forme d'une couche mince directement déposée sur le milieu actif solide.

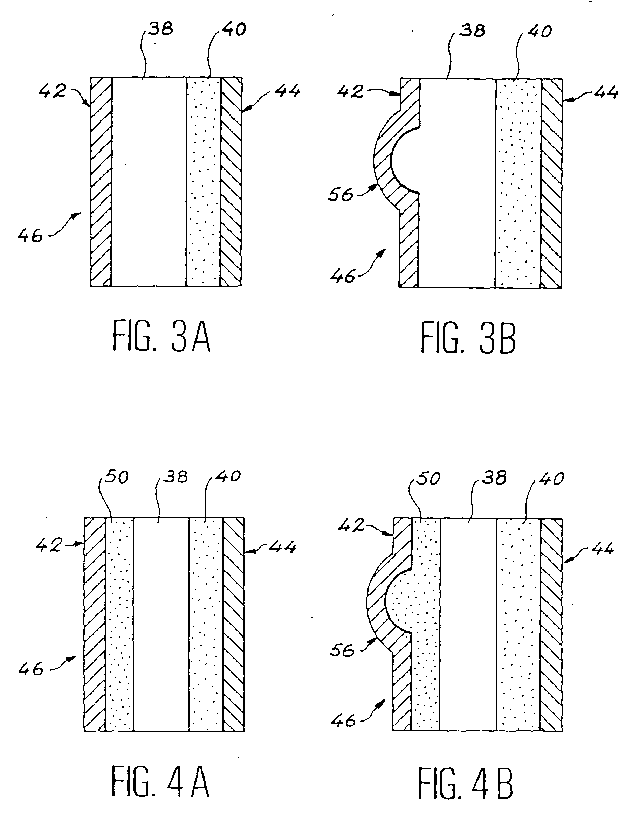

Un exemple de réalisation de la cavité est illustré sur la figure 3a, où la référence 38 désigne le milieu actif, la référence 40 la couche mince d'absorbant saturable, ces deux éléments étant compris entre deux miroirs 42 et 44 qui ferment la cavité laser, cette dernière étant désignée par la référence 46.

Pour l'absorbant saturable 40 on peut utiliser une couche mince composée d'un polymère contenant les molécules d'absorbant saturable. Typiquement pour un microlaser à 1,06 µm, on pourra utiliser, en tant qu'absorbant saturable, un colorant organique comme le bis (4-diéthylaminodithiobenzyl)nickel (BDN, Kodak, CAS N°51449-18-4) dans une solution contenant, en masse, 6% de poly(méthylméthacrylate) (PMMA) dans du chlorobenzène.

D'autres polymères tels que le poly(vinyl alcool) ou le poly(vinyl acétate) ou encore le poly(styrène) peuvent être employés (dans leurs solvants respectifs) à la place du PMMA. On peut aussi utiliser le bis(4-diméthylaminodithiobenzyl)nickel (BDN, Kodak, CAS N° 38465-55-3) comme colorant.

Le colorant peut aussi être incorporé dans un gel de silice ou bien greffé à même la chaîne de polymère.

De nombreux autres complexes métalliques et dithienes peuvent servir de colorant.

La technique peut aussi être employée pour le déclenchement de lasers fonctionnant à d'autres longueurs d'ondes que 1,06 µm; On déclenchera par exemple des lasers dopés avec de l'erbium ou avec un complexe Er⁺Yb émettant autour de 1,5 µm avec du tétraéthyl-octahydrotétraazapentaphène-dithiolatonickel.

Ce type de solution sera déposé à la tournette, directement sur le matériau laser (voir plus loin pour le procédé de préparation). On réalise ainsi des couches minces ayant une épaisseur de l'ordre de 1 à 5 µm.

Selon un autre mode de réalisation de l'invention, et comme illustré sur la figure 4a, il est possible de déposer une couche d'absorbant saturable 50, 40 de chaque côté du matériau laser actif 8. Ceci permet d'absorber plus d'énergie du faisceau pompe, mais la couche mince située du côté de l'entrée du faisceau pompe subira une usure plus importante du fait, précisément, du faisceau pompe. Les références 42 et 44 représentent les miroirs d'entrée et de sortie de la cavité.

Il est possible de fabriquer, par une méthode connue selon l'art antérieur (article A. Eda et al., publié dans CLEO'92, paper CWG33, p. 282, Conference on Laser and Electro-optics, Anaheim, USA, May 1992) un réseau de microlentilles 56 en un matériau transparent (silice, ...) sur la surface du matériau laser 38. Les dimensions typiques de ces microlentilles sont :

- diamètre de cent à quelques centaines de microns,
- rayons de courbure de quelques centaines de micromètres à quelques millimètres.

Ces microlentilles servent à réaliser des cavités "stables" du type plan-concave comme illustré sur la figure 3b ou sur la figure 4b dans le cas de la présence, sur la face d'entrée, d'une deuxième couche 22 d'absorbant saturable. Elles permettent également de focaliser le faisceau pompe.

Le miroir d'entrée 42, déposé par des procédés connus, peut être un miroir de type dichroïque présentant une réflectivité maximum (la plus proche possible de 100%) à la longueur d'onde du laser et une transmission la plus élevée possible (>80%) à la longueur d'onde de la pompe (en général vers 800 nm pour les matériaux dopés Nd, vers 980 nm pour ceux dopés Er, et vers 780 nm pour ceux dopés Tm). Le miroir de sortie 44 peut également être de type dichroïque mais laisse passer quelques pour cent du faisceau laser.

Un procédé pour fabriquer une telle cavité microlaser va maintenant être décrite. On peut distinguer, dans ce procédé, sept étapes successives :

1) - une première étape de choix du matériau actif laser. On a déjà présenté ci-dessus les différents matériaux possibles,
2) - une étape de conditionnement du cristal choisi : on l'oriente et on le découpe en lames d'épaisseur comprise entre 0,5 et 5 mm,
3) - une étape de rodage et de polissage des lames, selon des procédés connus de l'homme du métier,
4) - une étape de préparation et de dépôt d'une couche mince d'absorbant saturable. Cette couche est constituée d'un colorant organique absorbant saturable, en solution dans un polymère. Il a été déjà donné ci-dessus l'exemple du BDN en solution dans du PMMA. Une telle solution est filtrée et déposée sur le substrat, sur la face de sortie (opposée à la face d'entrée qui comporte le miroir dichroïque) au goutte à goutte avec un mouvement circulaire centrifuge. On peut utiliser pour ce dépôt à la "tournette" une machine standard telle que celle utilisée en microélectronique pour le dépôt des résines servant aux opérations de lithogravure. Le substrat est préalablement nettoyé de toutes les traces d'impuretés résultant du polissage. Il est mis en rotation (tournette) pendant 20 secondes à 2000 tours/minute, puis pendant 30 secondes à 5000 tours/minute. La couche est enfin mise à sécher 2 heures dans un four à 70°C.

On obtient ainsi un film de 1 µm d'épaisseur contenant 3% de molécules actives (BDN) et dont la densité optique est de 0,13 à 1,06 µm (74% de transmission) avant saturation.

En variant les paramètres de concentration du polymère, sa masse moléculaire ou son solvant, la proportion de colorant ainsi que la vitesse de rotation de la tournette, on peut ajuster les performances de l'absorbant saturable.

D'autres exemples de polymères et de colorant ont été donnés ci-dessus.

5) - une étape de dépôt du miroir d'entrée. Il s'agit d'un miroir dichroïque, obtenu par dépôt de multicouches diélectriques. Elle peut être réalisée avant ou après l'étape 4.

6) - une étape de dépôt du miroir de sortie sur la couche mince, qui met en oeuvre les mêmes techniques que celles du 5).

7) - une étape de découpe des lames pour obtenir des puces microlasers. Cette découpe peut être réalisée par exemple avec une scie diamantée, du type de celle utilisée en microélectronique pour la découpe des puces SI. Ensuite, on peut encore découper les tranches obtenues en "petites puces" de quelques mm$^2$ pour récupérer les cavités laser ainsi réalisées.

On intègre ensuite la puce laser obtenue dans un boîtier avec sa source de pompage (diode laser).

Ainsi qu'on l'a décrit ci-dessus, les lasers obtenus peuvent être monofréquence, car la longueur de la cavité peut être faible, de l'ordre de quelques centaines de micromètres. On peut ainsi obtenir un seul mode longitudinal dans la bande de gain du cristal laser (1 à 3 nanomètres selon les matériaux). Par ailleurs, un pompage longitudinal permet d'optimiser l'intégrale de recouvrement entre la distribution spatiale du gain (image de la pompe) et celle associée au mode transverse de la cavité laser.

D'autre part, la longueur d'onde d'émission peut être ajustée très simplement d'une manière très précise sur 1 à 2 nanomètres, soit en ajustant la température de la puce laser, soit en ajustant sa longueur par une cellule piézoélectrique ou par un composant électrooptique dans une configuration de deux cavités couplées. La longueur d'onde peut être stabilisée en asservissant la température ou la longueur de la cavité, par effet piézoélectrique ou électro-optique. Avec la structure d'absorbant saturable décrite ci-dessus, on peut obtenir des impulsions très brèves (d'une durée inférieure à 1 nanoseconde) et de fortes puissances crêtes (plus de 1 kW). Actuellement, les impulsions obtenues présentent des temps de montée inférieurs à 300 picosecondes, ce qui signifie, pour une mesure en temps de vol de l'impulsion lumineuse, une précision de 2cm pour un rapport signal/bruit de 4, et ceci sur une seule mesure, c'est-à-dire sans accumulation statistique. Cette précision est impossible à obtenir pour des télémètres utilisant des diodes laser. En effet, les courants d'injection nécessaires pour produire la puissance nécessaire sont alors supérieurs à 20 ampères, avec des temps de montée de 300 picosecondes, ce qui est impossible à obtenir du fait de la limitation due aux inductances parasites et aux capacités de jonction.

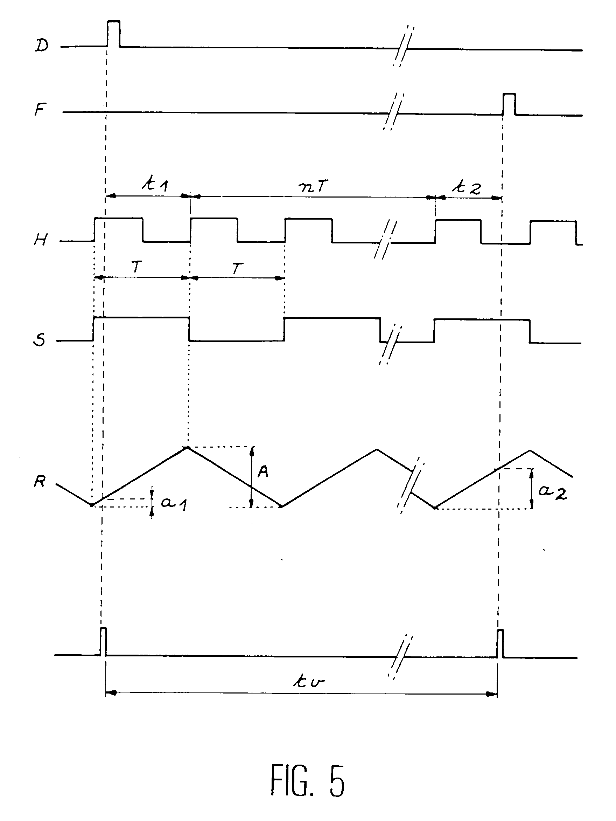

Il reste maintenant à décrire le circuit de détection, désigné par la référence 12 sur la figure 1. Un mode particulier de réalisation de ce circuit est décrit dans la suite, en liaison avec les figures 5 à 8. Ce circuit permet de réaliser la mesure de l'intervalle de temps entre l'instant d'émission de l'impulsion du microlaser et le retour de cette impulsion, après réflexion sur un objet. Ce circuit permet de tenir compte du non synchronisme de quelques 10 μs de fluctuation entre le pulse du microlaser et l'horloge du dispositif de mesure de temps.

Pour mesurer la durée de l'intervalle de temps entre l'impulsion lumineuse émise D et l'impulsion reçue F, on mesure la partie grossière de l'intervalle de temps de manière numérique, et la partie fine de manière analogique. Les paramètres ainsi acquis sont ensuite recombinés pour obtenir le résultat. La mesure de temps est ainsi obtenue en associant une grandeur numérique sous la forme d'un nombre de périodes d'horloge comptées, et des grandeurs analogiques obtenues par la conversion de temps en amplitudes de tension.

Ce principe est illustré plus précisément à l'aide du chronogramme de la figure 5. On cherche à mesurer l'intervalle de temps $t_V$ entre l'impulsion de départ D (signal de début de l'intervalle, transmis au dispositif 12, et correspondant à l'impulsion émise par le microlaser) et l'impulsion de fin d'intervalle à mesurer F (signal de fin de l'intervalle transmis au dispositif 12, et correspondant à l'impulsion de retour 18).

Pour cela, on utilise une horloge de base H, de période T, dont on compte le nombre n de périodes pendant la durée $t_v$. Le temps total correspondant à l'écoulement de cette période est égal à nT. Comme l'horloge n'est pas synchrone avec les signaux de départ D et de fin F, il faut en outre déterminer le temps $t_1$, qui s'écoule entre le signal de départ D et le début de la première impulsion d'horloge qui commence après D, et, d'autre part, le temps $t_2$, qui s'écoule entre le signal de fin F et la fin de la dernière période d'horloge qui s'achève avant le signal F. Pour obtenir la durée de l'intervalle de temps $t_V$, il suffit ensuite d'additionner les trois temps mesurés : $t_1+nT+t_2$.

Pour déterminer $t_1$ et $t_2$, on utilise un signal triangulaire R, de période 2T, d'amplitude A, et synchrone avec l'horloge de base de période T. A tout instant, si a est l'amplitude mesurée sur la rampe, le t écoulé depuis le début de la rampe est égal à $\frac{T}{A}\cdot a$. En échantillonnant les rampes à l'apparition du signal de départ D et du signal de fin F, on obtient des amplitudes $a_1$ et $a_2$ représentatives respectivement de $t_1$ et $t_2$.

Si l'impulsion de départ se produit au cours d'une rampe montante, on a alors : $t_1=\frac{T}{A}\cdot a_1$.

Si l'impulsion de départ se produit au cours d'une rampe descendante, on a : $t_1=T-\frac{T}{A}\cdot a_1$.

Si l'impulsion de fin F se produit sur une rampe montante, on a : $t_2=\frac{T}{A}\cdot a_2$.

Si l'impulsion de fin F se produit sur une rampe descendante, on a : $t_2=T-\frac{T}{A}\cdot a_2$..

$t_1$ et $t_2$ sont ensuite numérisés, ce qui donne deux valeurs $T_1$ et $T_2$. On obtient ensuite la durée de l'intervalle de temps $t_v=nT+T_1+T_2$.

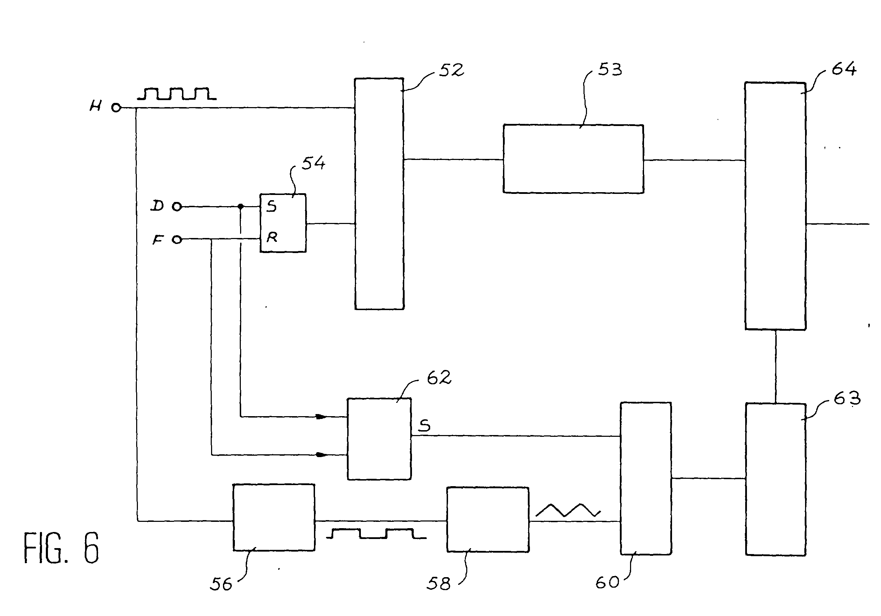

Un dispositif pour la mise en oeuvre de l'invention est représenté sur la figure 6. Une horloge H délivre des impulsions de période T sur une des entrées d'une porte ET, désignée par la référence 52. Cette horloge H peut être réalisée à partir d'un oscillateur à quartz, fonctionnant par exemple à une fréquence de 200 MHz. L'autre entrée de la porte ET reçoit un signal à partir de la sortie Q d'une bascule RS désignée par la référence 54, sur l'entrée S de laquelle on envoie le signal de départ D, tandis que l'entrée R est pilotée par le signal de fin F. L'ensemble constitué par la porte ET et la bascule 54 et l'horloge H constitue un circuit de mesure numérique permettant d'obtenir une valeur grossière de l'intervalle de temps à mesurer, cette valeur étant égale à $nT$ où $n$ est le nombre de périodes d'horloge $T$ écoulé entre le signal de début D et le signal de fin F. Elle est comptabilisée dans un compteur 53.

En parallèle, une division de la fréquence des signaux de l'horloge H est effectuée par un diviseur 56, constitué par exemple par une bascule, la sortie de ce diviseur alimentant un générateur de rampes 58. Ce générateur peut être réalisé par la charge et la décharge à courant constant d'un condensateur. La période et la pente de ces rampes sont très bien définies. La sortie du générateur de rampes 58 est envoyée sur un convertisseur analogique-numérique rapide 60 (par exemple du type flash ou échantillonneur rapide + convertisseur), dont une autre entrée reçoit un signal provenant par exemple d'une bascule 62, pilotée par les signaux D et F de début et de fin de la période à mesurer. Ainsi, le convertisseur 60 prélève l'information sur l'amplitude de la rampe aux instants de début D et de fin F de l'intervalle de temps à mesurer, ainsi que l'information relative à la parité de la rampe à ces instants, c'est-à-dire à son caractère montant ou descendant. Ce convertisseur permet d'obtenir les informations portant sur les valeurs $T_1$ et $T_2$. Ces informations sont mémorisées dans une mémoire 63.

L'information grossière portant sur $nT$ et les informations "fines" portant sur les intervalles $T_1$ et $T_2$ sont envoyées à un circuit de traitement 64 qui calcule la durée $t_v$ temps à mesurer.

Ce dispositif permet d'obtenir une bonne précision, puisqu'il permet de s'affranchir de toute synchronisation des signaux de départ D et de fin F de mesure par rapport à l'horloge H du chronomètre ; il permet également de s'affranchir de la capacité limitée du chronomètre à déterminer un faible et un très important écart temporel, pouvant varier de quelques picosecondes à l'infini, du fait de sa fréquence qui est fixe.

Ce dispositif permet également de déterminer des intervalles de temps importants avec une précision constante, quelle que soit la durée de cet intervalle de temps. Ceci n'est pas vrai dans le cas des dispositifs de mesure de la durée d'un intervalle de temps selon l'art antérieur, notamment dans le cas du dispositif décrit dans la demande de brevet français n°93 08145 du 2 juillet 1993. En effet, ce dernier dispositif fait intervenir, en début de mesure de l'intervalle de temps, la décharge d'un condensateur, et en fin de mesure de l'intervalle de temps la charge du même condensateur ; or, la charge mesurée immédiatement après l'arrivée du signal D peut varier avant que l'on ait atteint la partie finale de l'intervalle de temps à mesurer, juste avant le signal de fin F, et ceci d'autant plus que l'intervalle de temps à mesurer est important. Dans le dispositif selon la présente invention, on évite ce problème en ayant recours à des rampes récurrentes.

De plus, ce type de dispositif peut être facilement intégrable pour réaliser un circuit compact.

Un autre mode particulier de réalisation du circuit 12 permet de tenir compte des problèmes liés aux situations d'ambiguïté sur le signal de départ D et sur le signal d'arrivée F. Ces problèmes surgissent lorsque l'un ou l'autre de ces signaux, ou les deux, se produisent simultanément à un front de montée ou de descente des signaux de l'horloge. Le compteur de la partie numérique du dispositif, partie qui détermine la mesure grossière de l'intervalle de temps, peut alors compter une impulsion d'horloge supplémentaire, qui n'aurait pas du être comptée.

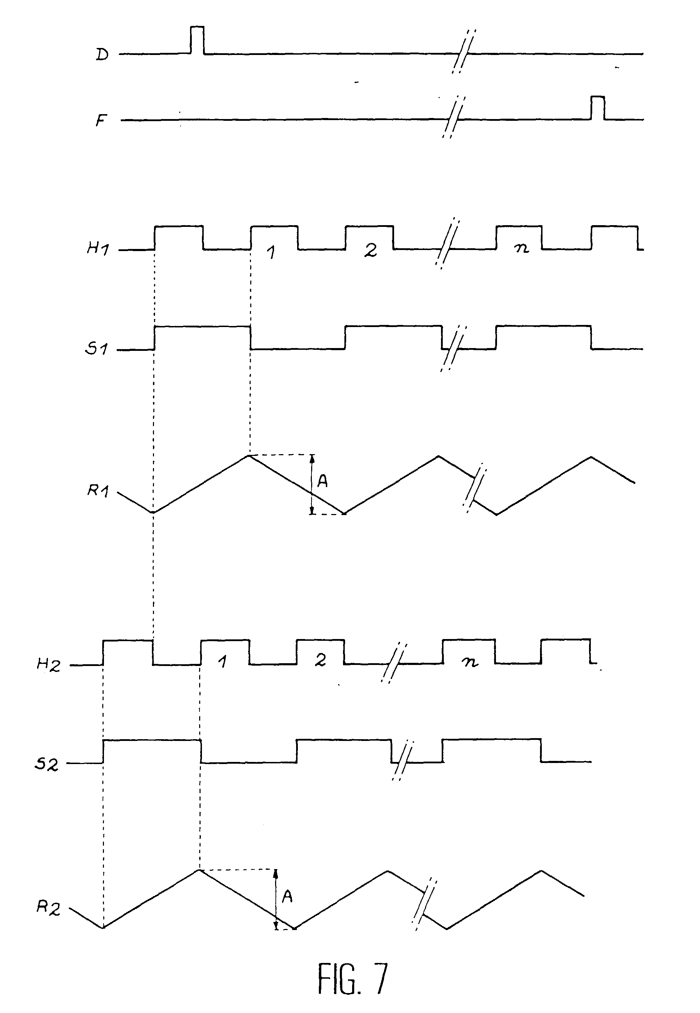

De façon à résoudre ce problème, on peut utiliser un dispositif qui fonctionne sur le principe illustré sur la figure 7. Conformément à ce qui a déjà été expliqué ci-dessus, une horloge $H_1$ délivre des signaux de période $T$. Un diviseur de fréquence permet de générer des signaux $S$, de période $2T$, synchronisés avec les signaux de l'horloge $H_1$. On peut ainsi générer des rampes montantes et descendantes $R_1$, d'amplitude $A$. Un dispositif de retard permet de générer un deuxième signal d'horloge $H_2$, à partir du signal $H_1$, les signaux de $H_2$ étant décalés de $T/2$ par rapport aux signaux de $H_1$. Ainsi, un front descendant d'un créneau de $H_2$ correspond à un front montant d'un créneau de $H_1$, comme on peut le voir sur la figure 7. Ce signal d'horloge $H_2$ permet de générer, de la même manière qu'il a été expliqué ci-dessus pour l'horloge $H_1$, un signal $S_2$ de période $2T$, qui va commander lui-même une rampe $R_2$ de même amplitude $A$ que la rampe $R_1$. Lorsque le signal D de départ de la mesure se présente, on échantillonne simultanément les deux rampes $R_1$ et $R_2$. S'il y a par exemple ambiguïté entre D et $H_1$, c'est-à-dire si le signal D se superpose à un front de montée d'un créneau de $H_1$, il ne peut y avoir simultanément ambiguïté entre le signal D et les signaux générés par $H_2$, du fait du décalage d'une demi-période entre les deux voies. Par conséquent, il suffit d'identifier l'horloge qui n'est pas en situation d'ambiguïté avec le signal de départ D, et de ne retenir que la valeur échantillonnée de la rampe R correspondante pour déterminer $t_1$. Par exemple, si la situation d'ambiguïté se présente entre le signal de départ D et l'horloge $H_1$, l'horloge valide pour déterminer la mesure de $t_1$ est l'horloge $H_2$ et la valeur à prendre en compte est celle mesurée sur la rampe $R_2$.

Il en va de même pour toute situation ambiguïté sur le signal F. Lorsque le signal de fin F se présente, on échantillonne simultanément les deux rampes $R_1$ et $R_2$. On prend $t_2$ la valeur de la rampe $R_1$ ou $R_2$ issue de l'horloge $H_1$ ou $H_2$ qui ne présente pas ambiguïté avec le signal F.

Dans le cas où une situation d'ambiguïté existe simultanément sur D et F, il est possible de rajouter un troisième circuit avec une horloge $H_3$, décalée par rapport à $H_2$ et $H_1$.

Dans le cas où il n'y a aucune ambiguïté, ni avec l'horloge $H_1$ ni avec l'horloge $H_2$, les valeurs de temps obtenues ($t_1$ ou $t_2$) seront prises indifféremment sur l'un des deux circuits correspondant aux deux horloges.

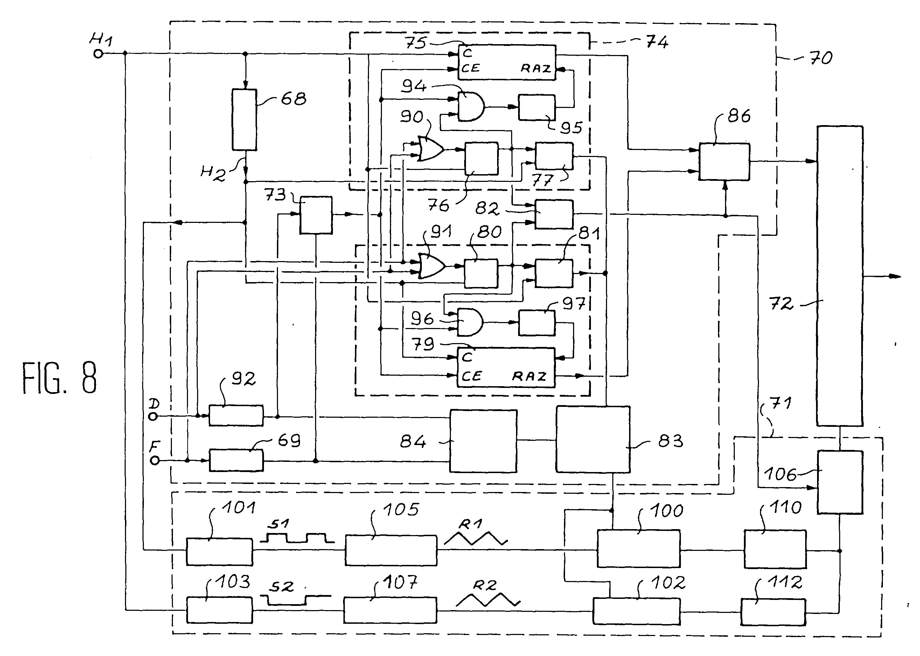

Le dispositif correspondant à ce mode particulier de mise en oeuvre de l'invention est illustré sur la figure 8. Sur cette figure, dans un premier bloc 74, un premier compteur 75 reçoit, sur son entrée autorisation CE, un ordre de comptage venant d'une bascule 73 et, sur son entrée C, les signaux d'horloge $H_1$. Les données en sortie du premier compteur 75 sont transmises à un circuit de traitement 72 par l'intermédiaire d'un circuit d'aiguillage 86 commandé par un circuit OU 82.

Les bascules D 76 et 80 reçoivent les signaux D et F par l'intermédiaire d'une fonction OU 90, 91 sur leur entrée D. La bascule 73, qui délivre le signal d'autorisation CE est également commandée par les signaux D et F tous deux retardés d'une quantité voisine de 3 temps de propagation dans des portes par des dispositifs 69, 92 qui sont constitués par exemple par des retards de portes. Le premier circuit ET 77 réalise la fonction ET de la sortie de la bascule 76 et de l'horloge $H_2$. Les signaux de cette dernière sont obtenus à partir de $H_1$ et d'un circuit de retard 68, constitué par exemple par des retards de portes.

Dans le second bloc 78, un second compteur 79 reçoit sur son entrée autorisation CE un ordre de comptage venant de la bascule 73. Les données de ce compteur 79 sont transmises au circuit de traitement 72 par l'intermédiaire du circuit 86. La seconde bascule de type D 80 fonctionne comme décrit ci-dessus. Le second circuit ET 81 réalise la fonction ET entre la sortie du circuit 80 et l'horloge $H_1$.

La sortie du circuit 82 commande le fonctionnement du circuit aiguillage 86 pour obtenir la lecture du compteur 75 ou 79 dont la bascule de type D (76 ou 80) associée n'a pas basculé la première. Il détecte la première des bascules 76 ou 80 qui a basculé et il autorise la lecture du compteur dont la bascule n'a pas changé d'état.

S'il y a une situation d'incertitude, par exemple au début du comptage, pour l'un ou l'autre des compteurs, le premier des circuits d'identification de présence 76, 80 qui bascule valide le choix entre les horloges $H_1$ ou $H_2$. Le compteur validé est laissé inchangé, par contre l'autre compteur est remis à zéro avant l'arrivée de la deuxième impulsion d'horloge suivant le signal D. Ceci est réalisé par les circuits 94, 95 et 96, 97 respectivement pour les premier et deuxième compteurs. Les circuits 94 et 96 sont des circuits ET, les circuits 95 et 97 sont des mises en forme temporelle.

Une bascule 83 (bascule de type RS) reçoit sur son entrée SET la sortie d'un circuit OU 84 dont les entrées correspondent aux signaux D et F retardés de par les circuits 92 et 69. La bascule 83 reçoit sur son autre entrée les sorties des deux portes ET 77, 81.

Cette bascule 83 commande une entrée d'un convertisseur analogique-numérique 100 et une entrée d'un convertisseur analogique-numérique 102. Une autre entrée de chacun de ces convertisseurs 100, 102 est reliée à l'horloge $H_1$ (respectivement $H_2$) par l'intermédiaire d'une bascule 101 (respectivement 103) qui permet de générer un signal $S_1$ (respectivement $S_2$) de période 2T, et d'un générateur de rampe 105 (respectivement 107) pour générer une rampe R1 (respectivement R2). En aval des convertisseurs analogiques-numériques, on trouve deux mémoires 110, 112 et un circuit aiguillage 106 commandé par le circuit 82.

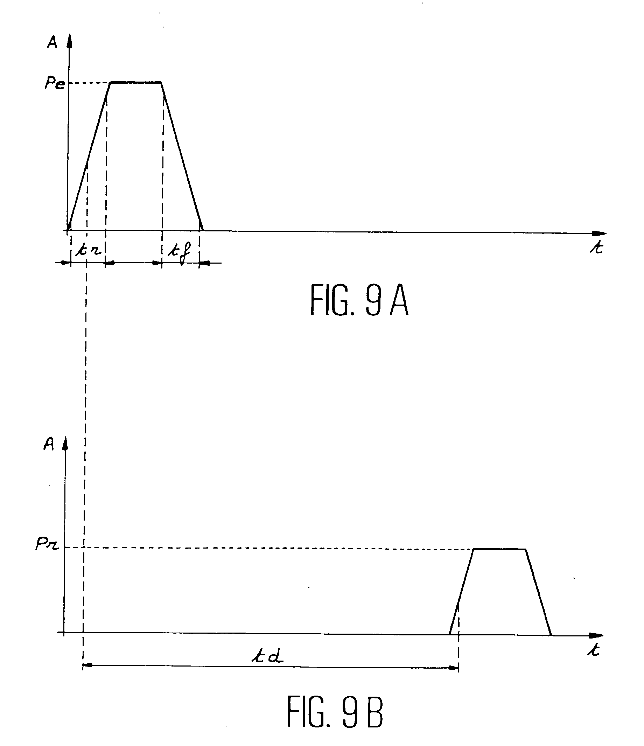

Il reste à décrire la mesure du trajet temporel aller et retour d'une impulsion lumineuse émise par le microlaser et réfléchie par un objet. A cette fin, on se référera aux figures 9a et 9b qui décrivent respectivement l'évolution temporelle d'une impulsion lumineuse émise et celle d'une impulsion lumineuse reçue. Si on appelle d la distance entre l'émetteur (c'est-à-dire le microlaser) et la cible, et c la vitesse de la lumière, $t_d$ le trajet temporel aller et retour, on a : $t_d = 2d/c$.

Le rapport de la puissance reçue $P_r$ en fonction de la puissance émise $P_e$ est égal à :

$$\frac{P_r}{P_e} = K_t \cdot K_d \cdot \frac{1}{d^2}$$

où $K_t$ est le coefficient de transmission atmosphérique et $K_d$ le coefficient de diffusion du matériau constitutif de l'objet.

La précision de la mesure est donnée par $\sigma_x = t_r \cdot \frac{c}{2,36.snr}$ où $t_r$ est le temps de montée de l'impulsion, et snr est le rapport signal/bruit à la détection.

D'après cette formule, et d'après la valeur du temps de montée qui a été donné ci-dessus, en liaison avec la performance du microlaser (temps de montée inférieur à 300 picosecondes), on voit que l'on peut obtenir une précision de 2cm pour un rapport signal/bruit de 4 sur une seule mesure, sans accumulation statistique.

## Revendications

1. Dispositif de télémétrie laser, fonctionnant sur le principe de la mesure du temps de vol d'une impulsion lumineuse, et possédant des moyens (6, 10) de réception d'une impulsion lumineuse (18, 19) réfléchie par un objet (4) et de détection de l'instant de réception de cette impulsion, caractérisé en ce qu'il comprend :

    - un microlaser (2) à déclenchement passif,

- des moyens (8, 10) de détection de l'instant d'émission d'une impulsion du microlaser (2),
- des moyens (12) de mesure de l'intervalle de temps séparant l'instant d'émission de l'impulsion microlaser de l'instant de réception du faisceau réfléchi.

**2.** Dispositif selon la revendication 1, caractérisé en ce que le microlaser comporte un milieu actif solide (38), un absorbant saturable (40, 50), un miroir d'entrée (42), un miroir de sortie (44), l'absorbant saturable étant une couche mince de matériau absorbant saturable directement déposée sur le milieu actif solide.

**3.** Dispositif selon la revendication 2, caractérisé en ce que le milieu actif solide (38) est constitué d'un matériau de base choisi parmi $Y_3Al_5O_{12}$, $LaMgAl_{11}O_{19}$, $YVO_4$, $Y_2SiO_5$, $YLiF_4$ ou $GdVO_4$ et est dopé avec des ions de néodyme (Nd), d'erbium ('Er), de thulium (Tm), d'holmium (Ho), ou avec un codopage d'ions erbium et d'ytterbium (Er+Yb), ou avec un codopage de thulium et d'holmium (Tm+Ho).

**4.** Dispositif selon l'une des revendications 2 ou 3, caractérisé en ce que la couche mince est composée d'un colorant organique en solution dans un solvant polymère.

**5.** Dispositif selon la revendication 4, caractérisé en ce que le colorant organique est choisi parmi le bis(4-diéthylaminodithiobenzyl)nickel ou le bis(4-diméthylaminodithiobenzyl)nickel et que le solvant est une solution de poly(méthyméthacrylate) (PMMA), de poly(vinylalcool) ou de poly(vinyl acétate) ou de poly(styrène).

**6.** Dispositif selon la revendication 2, caractérisé en ce que la couche mince est susceptible d'être obtenue par épitaxie en phase liquide.

**7.** Dispositif selon l'une des revendications 2 à 6, caractérisé en ce que le microlaser comporte une deuxième couche d'absorbant saturable (50).

**8.** Dispositif selon l'une des revendications précédentes, caractérisé en ce que le microlaser comporte un réseau de micro-lentilles (56).

**9.** Dispositif selon l'une des revendications 2 à 8, caractérisé en ce que les miroirs d'entrée (42) et de sortie (44) sont des miroirs dichroïques.

**10.** Dispositif selon l'une des revendications précédentes, caractérisé en ce que les moyens (8, 20) de détection de l'instant d'émission d'une impulsion du microlaser comprennent :

- un polariseur linéaire (22) à deux prismes (26, 27) en matériau biréfringent assemblés selon une face de jonction (28), placé sur le trajet des impulsions du microlaser de façon que les impulsions lumineuses y pénètrent par une face d'entrée (29) appartenant à l'un des prismes et en sortent par une face de sortie (30) appartenant à l'autre prisme, les faces d'entrée (29) et de sortie (30) étant polies et perpendiculaires au trajet des impulsions du microlaser,
- une lame quart d'onde (24), disposée parallèlement à la face de sortie (30) du polariseur,
- des moyens (32), disposés sur le trajet des impulsions lumineuses sortant de la lame quart d'onde, pour séparer ces impulsions en une première partie qui est transmise pour constituer une impulsion principale (16) et une seconde partie qui est réfléchie vers la lame quart d'onde (30) et le polariseur linéaire (22) pour constituer une impulsion secondaire (20),
- le polariseur linéaire (22) comporte une troisième face polie (28) permettant le prélèvement de l'impulsion secondaire éjectée du polariseur linéaire.

**11.** Dispositif selon l'une des revendications précédentes, caractérisé en ce que les moyens (12) de mesure de l'intervalle de temps séparant l'instant d'émission de l'impulsion microlaser (signal D) de l'instant de réception du faisceau réfléchi (signal F) comportent :

- une première horloge (H, $H_1$) qui délivre des impulsions avec une période T,
- un circuit numérique (52, 53, 54 ; 70) pour compter le nombre d'impulsions de la première horloge qui sont suivies par une période entière T et qui sont comprises entre le signal de début (D) et le signal de fin (F),
- un circuit analogique (56, 58, 60, 62, 63 ; 71) pour déterminer d'une part le temps $t_1$ séparant le signal (D) et le début de la première impulsion de la première horloge qui commence après (D) et d'autre part le temps $t_2$ séparant le signal de fin (F) de la fin de la dernière période de la première horloge qui s'achève avant (F), et apte à convertir les données analogiques obtenues en données numériques,
- un circuit de traitement (64, 72), pour déterminer la durée de l'intervalle de temps à partir des données fournies par le circuit numérique et celles fournies par le circuit analogique préalablement converties en données numériques.

**12.** Dispositif selon la revendication 11, caractérisé en ce qu'il est muni d'une seconde horloge ($H_2$), dont les impulsions sont décalées par rapport à celles de la première horloge ($H_1$), en ce que le circuit numérique (70) compte également le nombre d'impulsions de la seconde horloge qui sont suivies par une période entière T et qui sont comprises entre le signal de début (D) et de fin (F), en ce que le circuit analogique (71) détermine d'une part le temps séparant le signal (D) et le début de la première impulsion de la deuxième horloge qui commence après (D) et, d'autre part, le temps séparant le signal de fin (F) de la fin de la dernière période de la deuxième horloge qui s'achève avant (F), en ce que ce circuit analogique est apte à convertir les données analogiques obtenues en données numériques, et en ce qu'il comporte en outre des moyens aptes à déterminer lequel des comptages réalisés sur l'une des deux horloges ($H_1$, $H_2$) est à prendre en compte, de manière à résoudre toute situation d'ambiguïté qui pourrait conduire à une erreur de comptage d'une période d'horloge.

**Claims**

1. Laser telemetry device operating on the principle of measuring the transit time of a light pulse and having means (6, 10) for the reception of a light pulse (18, 19) reflected by an object (4) and for the detection of the reception time of said pulse, characterized in that it comprises:

   - a passive switching microlaser (2),
   - means (8, 10) for the detection of the emission time of a pulse of the microlaser (2),
   - means (12) for measuring the time interval separating the emission time of the microlaser pulse from the reception time of the reflected beam.

2. Device according to claim 1, characterized in that the microlaser comprises a solid active medium (38), a saturable absorbent (40, 50), an input mirror (42), an output mirror (44), the saturable absorbent being a thin, saturable absorbent material layer directly deposited on the solid active medium.

3. Device according to claim 2, characterized in that the solid active medium (38) is constituted by a basic material chosen from among $Y_3Al_5O_{12}$, $LaMgAl_{11}O_{19}$, $YVO_4$, $Y_2SiO_5$, $YLiF_4$ or $GdVO_4$ and is doped with ions of neodymium (Nd), erbium (Er), thulium (Tm), holmium (Ho) or with a codoping of ions of erbium and ytterbium (Er+Yb) or with a codoping of thulium and holmium (Tm+Ho).

4. Device according to either of the claims 2 and 3, characterized in that the thin layer is constituted by an organic dye dissolved in a polymer solvent.

5. Device according to claim 4, characterized in that the organic dye is chosen from among bis(4-diethylaminodithiobenzyl)nickel or bis(4-dimethylaminodithiobenzyl)nickel and that the solvent is a solution of polymethyl methacrylate (PMMA), polyvinyl alcohol or polyvinyl acetate or polystyrene.

6. Device according to claim 2, characterized in that the thin layer is obtainable by liquid phase epitaxy.

7. Device according to any one of the claims 2 to 6, characterized in that the microlaser has a second saturable absorbent layer (50).

8. Device according to any one of the preceding claims, characterized in that the microlaser has an array of microlenses (56).

9. Device according to any one of the claims 2 to 8, characterized in that the input (42) and output (44) mirrors are dichroic mirrors.

10. Device according to any one of the preceding claims, characterized in that the means (8, 20) for detecting the emission time of a pulse of the microlaser comprise:

    - a linear polarizer (22) having two prisms (26, 27) and made from birefringent material assembled according to a junction face (28), placed on the path of the microlaser pulses in such a way that the light pulses penetrate the same by an entrance face (29) belonging to one of the prisms and pass out of the same by an exit face (30) belonging to the other prism, the entrance face (29) and exit face (30) being polished and perpendicular to the path of the microlaser pulses,
    - a quarter-wave plate (24) positioned parallel to the exit face (30) of the polarizer,
    - means (32) located on the path of the light pulses passing out of the quarter-wave plate, in order to split said pulses into a first part transmitted for forming a main pulse (16) and a second part reflected to the quarter-wave plate (30) and the linear polarizer (22) for constituting a secondary pulse (20),
    - the linear polarizer (22) has a third polished face (28) permitting the sampling of the secondary pulse ejected from the linear polarizer.

11. Device according to any one of the preceding claims, characterized in that the means (12) for measuring the time slot separating the emission time of the microlaser pulse (signal D) from the reception time of the reflected beam (signal F) comprise:

    - a first clock (H, $H_1$) supplying the pulses with a period T,

- a digital circuit (52, 53, 54; 70) for counting the number of pulses of the first clock followed by a complete period T and which are located between the start signal (D) and the stop signal (F),

- an analog circuit (56, 58, 60, 62, 63; 71) for determining on the one hand the time $t_1$ separating the signal (D) and on the other hand the time t2 separating the stop signal (F) from the end of the final period of the first clock completed before (F) and able to convert the analog data obtained into digital data,

- a processing circuit (64, 72) for determining the duration of the time slot on the basis of data supplied by the digital circuit and those supplied by the analog circuit previously converted into digital data.

12. Device according to claim 11, characterized in that it is provided with a second clock ($H_2$), whose pulses are shifted compared with those of the first clock ($H_1$), the digital circuit (70) also counting the number of pulses of the second clock followed by a complete period T and occurring between the start signal (D) and the stop signal (F), the analog circuit (71) determining on the one hand the time separating the signal (D) and the start of the first pulse of the second clock commencing after (D) and on the other the time separating the stop signal (F) from the end of the final period of the second clock completed before (F), said analog circuit being able to convert the analog data obtained into digital data and also having means able to determine which of the counts performed on one of the two clocks ($H_1$, $H_2$) is to be taken into account, so as to resolve any ambiguity situation which could lead to a clock period counting error.

**Patentansprüche**

1. Telemetrievorrichtung mit Laser, auf dem Prinzip der Flug- bzw. Laufzeitmessung eines Lichtimpulses beruhend, mit Einrichtungen (6, 10) zum Empfangen eines durch ein Objekt (4) reflektierten Lichtimpulses (18, 19) und zum Detektieren des Empfangszeitpunkts dieses Impulses, **dadurch gekennzeichnet,** daß sie umfaßt:

- einen Mikrolaser (2) mit passiver Güteschaltung bzw. Auskopplung,
- Einrichtungen (8, 10) zum Detektieren des Sendezeitpunkts eines Impulses des Mikrolasers (2),
- Einrichtungen (12) zum Messen des Zeitintervalls, das den Sendezeitpunkt von dem Empfangszeitpunkt des reflektierten Strahls trennt.

2. Vorrichtung nach Anspruch 1, dadurch gekennzeichnet, daß der Mikrolaser ein festes aktives Medium (38), ein sättigbares Absorptionsmaterial (40, 50), einen Eingangsspiegel (42) und einen Ausgangsspiegel (44) umfaßt, wobei das sättigbare Absorptionsmaterial direkt auf dem festen aktiven Medium abgeschieden ist.

3. Vorrichtung nach Anspruch 2, dadurch gekennzeichnet, daß das feste aktive Medium (38) durch ein Basismaterial gebildet wird, das ausgewählt wird unter $Y_3Al_5O_{12}$, $LaMgAl_{11}O_{19}$, $YVO_4$, $Y_2SiO_5$, $YLiF_4$ oder $GdVO_4$ und dotiert ist mit Ionen von Neodym (Nd), Erbium (Er), Thulium (Tm), Holmium (Ho) oder einer Kodotierung mit Erbium- und Ytterbiumionen (Er+Yb) oder einer Kodotierung mit Thulium- und Holmiumionen (Tm+Ho).

4. Vorrichtung nach Anspruch 2 oder 3, dadurch gekennzeichnet, daß die Dünnschicht durch einen organischen Farbstoff gebildet wird, aufgelöst in einem polymeren Lösungsmittel.

5. Vorrichtung nach Anspruch 4, dadurch gekennzeichnet, daß der organische Farbstoff ausgewählt wird zwischen Bis(4-diethylaminodithiobenzyl)nikkel oder Bis(4-dimethylaminodithiobenzyl)nickel und daß das Lösungsmittel eine Lösung aus Polymethylmethacrylat (PMMA) , Polyvinylalkohol oder Polyvinylacetat oder Polystyrol ist.

6. Vorrichtung nach Anspruch 2, dadurch gekennzeichnet, daß die Dünnschicht durch Flüssigphasen-Epitaxie hergestellt werden kann.

7. Vorrichtung nach einem der Ansprüche 2 bis 6, dadurch gekennzeichnet, daß der Mikrolaser eine zweite Schicht aus sättigbarem Absorptionsmaterial (50) umfaßt.

8. Vorrichtung nach einem der vorangehenden Ansprüche, dadurch gekennzeichnet, daß der Mikrolaser ein Gitter aus Mikrolinsen (56) umfaßt.

9. Vorrichtung nach einem der Ansprüche 2 bis 8, dadurch gekennzeichnet, daß die Eingangslinse (42) und die Ausgangslinse (44) dichroitische Linsen sind.

10. Vorrichtung nach einem der vorangehenden Ansprüche, dadurch gekennzeichnet, daß die Einrichtungen (8, 20) zum Detektieren des Sendezeitpunkts eines Impulses des Lasers umfassen:

- einen Linearpolarisator (22) mit zwei Prismen (26, 27) aus doppelbrechendem Material, zusammengesetzt an einer Verbindungs- bzw. Übergangsfläche (28), angeordnet auf dem Weg des Mikrolaserimpulses, so daß die Lichtimpulse durch eine Eingangsfläche (29) eindringen, die zu einem der Prismen gehört, und durch eine Ausgangsfläche (30) austreten, die zu dem anderen Prisma gehört, wobei die Eingangsfläche (29) und die Ausgangsfläche (30) poliert sind und senkrecht zu dem Weg des Mikrolaserimpulses angeordnet sind,

- ein Viertelwelienlängenplättchen (24), parallel zu der Ausgangsseite (30) des Polarisators angeordnet,
- Einrichtungen (32), angeordnet auf dem Weg der aus dem Viertelwellenlängenplättchen austretenden Lichtimpulse, um diese Impulse aufzuteilen in einen ersten Teil, der durchgelassen wird, um einen Hauptimpuls (16) zu bilden, und einen zweiten Teil, der auf das Viertelwellenlängenplättchen (30) und den Linearpolarisator (22) reflektiert wird, um einen Sekundärimpuls (20) zu bilden,
- eine dritte polierte Fläche (28) des Linearpolarisators (22), die ermöglicht, Proben des aus dem Linearpolarisator austretenden Sekundärimpulses zu nehmen.

11. Vorrichtung nach einem der vorangehenden Ansprüche, dadurch gekennzeichnet, daß die Einrichtungen (12) zum Messen der Zeitintervalle, die den Sendezeitpunkt der Mikrolaserimpulse (Signal D) vom Empfangszeitpunkt des reflektierten Strahls (Signal F) trennen, umfassen:

- einen ersten Takt (H, $H_1$), der Impulse mit einer Periode T liefert,
- eine Digitalschaltung (52, 53, 54; 70) zum Zählen der Anzahl der Impule des ersten Takts, auf die eine ganze Periode T folgt und die enthalten sind zwischen dem Anfangssignal (D) und dem Endsignal (F),
- eine Analogschaltung (56, 58, 60, 62, 63; 71), um einerseits die Zeit $t_1$, die das Signal (D) und den Anfang des ersten Impulses des ersten Takts trennt, der nach (D) beginnt, zu bestimmen und andererseits die Zeit $t_2$, die das Endsignal (F) vom Ende der letzten Periode des ersten Takts trennt, der vor (F) endet, und fähig, die erhaltenen analogen Daten in digitale Daten umzuwandeln,
- eine Verarbeitungsschaltung (64, 72) zum Bestimmen der Dauer des Zeitintervalls aufgrund der durch durch die Digitalschaltung gelieferten und der durch die Analogschaltung gelieferten, vorher in digitale Daten umgewandelten Daten.

12. Vorrichtung nach Anspruch 11, dadurch gekennzeichnet, daß sie einen zweiten Takt ($H_2$) umfaßt, dessen Impulse verschoben sind in bezug auf diejenigen des ersten Takts ($H_1$), daß die Digitalschaltung (70) auch die Anzahl der Impulse des zweiten Takts zählt, auf die eine ganze Periode T folgt und die enthalten sind zwischen dem Anfangssignal (D) und dem Endsignal (F), daß die Analogschaltung (71) einerseits die Zeit bestimmt, die das Signal (D) und den Anfang des ersten Impulses des zweiten Takts bestimmt, der nach (D) beginnt, und andererseits die Zeit, die das Endsignal (F) vom Ende der letzten Periode des zweiten Takts trennt, der vor (F) endet, daß die Analogschaltung fähig ist, die erfaßten analogen Daten in digitale Daten umzuwandeln, und daß sie außerdem Einrichtungen umfaßt, die fähig sind, zu bestimmen, welche der an einem der beiden Takte ($H_1$, $H_2$) durchgeführten Zählungen für die Berechnung berücksichtigt werden muß, um jede Zwei- bzw. Vieldeutigkeitssituation zu vermeiden, die zu einem Zählfehler einer Taktperiode führen könnte.

FIG. 1

FIG. 2

FIG. 3A

FIG. 3B

FIG. 4 A

FIG. 4 B

FIG. 5

FIG. 6

FIG. 7

FIG. 8

FIG. 9 A

FIG. 9 B